# EUROPÄISCHE PATENTSCHRIFT

(11) **EP 2 800 092 B1**
(45) Veröffentlichungstag und Bekanntmachung des Hinweises auf die Patenterteilung: **27.10.2021**
(21) Anmeldenummer: 14165526.6
(22) Anmeldetag: 23.04.2014
(51) Int. Cl.: G10K 11/22, G10K 15/02, B60Q 5/00

(54) **Straßenfahrzeug**
Road vehicle
Véhicule routier

(30) Priorität: 03.05.2013 DE 102013208098
(43) Veröffentlichungstag der Anmeldung: 05.11.2014
(73) Patentinhaber: Purem GmbH, 66539 Neunkirchen (DE)
(72) Erfinder: Pommerer, Michael, 73066 Uhingen (DE); Koch, Viktor, 73035 Göppingen (DE); Wink, Peter, 73035 Göppingen (DE)
(74) Vertreter: BRP Renaud & Partner mbB Rechtsanwälte Patentanwälte Steuerberater

(56) Entgegenhaltungen:
- DE-A1-102011 116 635
- GB-A- 2 476 470
- US-A1- 2009 066 499
- US-A1- 2009 255 754
- US-A1- 2010 245 069
- US-A1- 2012 076 314
- US-B1- 7 979 147

## Beschreibung

Die vorliegende Erfindung betrifft ein Straßenfahrzeug gemäß dem Oberbegriff des Anspruchs 1, das mit wenigstens einem Schallerzeuger ausgestattet ist.

Straßenfahrzeuge sind allgemein bekannt und umfassen ein Antriebsaggregat zum Antreiben des Fahrzeugs. Um das jeweilige Antriebsaggregat betreiben zu können, ist in der Regel ein Aggregatsteuergerät vorgesehen, das zum Ansteuern des Antriebsaggregats dient.

Eine Vielzahl von Straßenfahrzeugen weist als Antriebsaggregat eine Brennkraftmaschine auf. Moderne Brennkraftmaschinen bauen vergleichsweise klein, was sich insbesondere in einem relativ kleinen Hubraum zeigt. In der Folge sind derartige Brennkraftmaschinen im Betrieb vergleichsweise leise. In Verbindung mit einer verbesserten Schalldämmung im Bereich des Motorraums und/oder im Bereich eines Passagierraums ist es für Passagiere und insbesondere für den Fahrzeugführer häufig nicht mehr möglich, den aktuellen Betriebszustand der Brennkraftmaschine anhand eines damit korrelierenden Motorgeräusches zu erkennen. Insbesondere in Verbindung mit einer Start-Stopp-Automatik, die beim Anhalten des Fahrzeugs, zum Beispiel bei einem Ampelstopp, die Brennkraftmaschine automatisch ausschaltet und beim nachfolgenden Losfahren wieder automatisch startet, kann der Fahrzeugführer häufig nicht unterscheiden, ob die Brennkraftmaschine nun in Betrieb ist oder nicht. Es besteht jedoch für den Fahrzeugführer das Bedürfnis, den aktuellen Betriebszustand der Brennkraftmaschine quasi in Form eines akustischen Feedbacks des zugehörigen Motorgeräusches identifizieren zu können. Eine permanente Kenntnis des aktuellen Betriebszustands des Antriebsaggregats ist für eine erhöhte Fahrsicherheit bzw. Fahrzeugsicherheit von erhöhter Bedeutung.

Bei Fahrzeugen, die einen Elektromotor als Antriebsaggregat aufweisen, verschärft sich dieses Problem, da ein Elektromotor im Vergleich zu einem Explosionsmotor extrem leise ist und völlig andere Betriebsgeräusche erzeugt als eine Brennkraftmaschine. Die Geräusche eines Elektromotors sind für Fahrzeugnutzer häufig sehr ungewohnt, was eine Einschätzung des aktuellen Betriebszustands des Antriebsaggregats erheblich erschwert. Hinzu kommt, dass Elektromotoren in der Regel deutlich leiser sind als Brennkraftmaschinen. Entsprechendes gilt auch für Hybridantriebe, bei denen das Antriebsaggregat sowohl eine Brennkraftmaschine als auch wenigstens einen Elektromotor umfasst, wobei die Brennkraftmaschine als zusätzlicher Antrieb dienen kann oder als so genannter "Range-Extender" verwendet wird und dementsprechend nur zur Stromerzeugung für den jeweiligen Elektromotor und nicht zum unmittelbaren Antrieb des Fahrzeugs dient. Es besteht somit auch für Fahrzeuge, die einen Elektromotor als Antriebsaggregat aufweisen, ein Bedürfnis, ein akustisches Feedback für den Fahrzeugführer zu realisieren, um den aktuellen Betriebszustand des Antriebsaggregats besser einschätzen zu können.

Die leisen Antriebsaggregate moderner Straßenfahrzeuge können jedoch auch für andere Verkehrsteilnehmer, wie andere Fahrzeugführer, Radfahrer und Fußgänger, zu einem Problem werden, da sie quasi bei üblicher Geräuschkulisse akustisch nicht erkennbar sind. Insbesondere Fußgänger und Radfahrer sind es gewohnt, herannahende Fahrzeuge an ihrem Motorgeräusch zu erkennen. Dies ist bei Elektrofahrzeugen bzw. bei Hybridfahrzeugen im Elektro-Antriebsmodus quasi nicht mehr möglich. Da Gewohnheiten nur sehr schwer abzutrainieren sind, verbirgt sich hier ein hohes Gefahrenpotential, insbesondere für Fußgänger und Radfahrer.

Ein gattungsgemäßes Fahrzeug ist aus der US 2010/0 245 069 A1 bekannt und zeichnet sich dadurch aus, dass ein Erzeugersteuergerät den elektroakustischen Wandler abhängig vom aktuellen Betriebszustand des Antriebsaggregats zum Erzeugen eines Motorgeräusches einer Brennkraftmaschine ansteuert.

Ein weiteres Fahrzeug dieser Art ist beispielsweise aus der US 7 979 147 B1 bekannt.

Aus der US 2012/0 076 314 A1 ist ein Fahrzeug mit Range-Extender bekannt, so dass es einen Elektromotor zum Antreiben des Fahrzeugs und eine Brennkraftmaschine zum Antreiben eines Generators aufweist. Hier wird der elektroakustische Wandler in Abhängigkeit des Betriebszustands des Elektromotors angesteuert.

Aus der DE 10 2011 116 635 A1 ist eine Abgasanlage mit aktiver Geräuschreduzierung bekannt, bei der am Austrittsende des elektroakustischen Wandlers ein Gitter angeordnet ist.

Aus der US 2009/0 255 754 A1 ist ein elektroakustischer Wandler für eine Abgasanlage bekannt, bei dem eine Membran in einem Gehäuse ein Vorvolumen von einem Rückvolumen trennt. Das Vorvolumen ist dabei in einem Trichter ausgebildet, der an ein Austrittsrohr angeschlossen ist, das gegenüber einer Axialrichtung des Wandlers geneigt ist.

Aus der US 2009/0 066 499 A1 ist ein Fahrzeug mit elektroakustischem Wandler bekannt, bei dem der Fahrzeugführer über eine Bedieneinrichtung den Wandler ein- und ausschalten kann.

Die vorliegende Erfindung beschäftigt sich mit dem Problem, für ein Straßenfahrzeug eine verbesserte Ausführungsform anzugeben, die sich insbesondere durch eine erhöhte Betriebssicherheit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Straßenfahrzeug mit wenigstens einem Schallerzeuger auszustatten, der zumindest einen elektroakustischen Wandler sowie ein Austrittsrohr aufweist. Der Schallerzeuger ist am bzw. im Fahrzeug so angeordnet, dass sein Austrittsrohr akustisch und fluidisch unmittelbar mit einem Abstrahlraum verbunden ist, in den der im Betrieb des Schallerzeugers vom Wandler erzeugter Schall abstrahlt. Des Weiteren ist ein Erzeugersteuergerät vorgesehen, das mit dem Wandler gekoppelt ist und zum Ansteuern des Wandlers dient. Das zum Betreiben des Schallerzeugers vorgesehene Erzeugersteuergerät ist nun mit dem zum Betreiben des Antriebsaggregats vorgesehenen Aggregatssteuergerät gekoppelt, so dass das Erzeugersteuergerät den aktuellen Betriebszustand des Antriebsaggregats kennt. Das Erzeugersteuergerät kann nun abhängig vom aktuellen Betriebszustand des Antriebsaggregats den Wandler zum Erzeugen von damit korrelierendem Schall ansteuern. Auf diese Weise ist es möglich, mit Hilfe des Schallerzeugers, künstlich Motorgeräusche hinreichender Lautstärke zu erzeugen, wodurch für den Fahrzeugführer ein akustisches Feedback für den aktuellen Betriebszustand des Antriebsaggregats ermöglicht wird. Die mit Hilfe des Schallerzeugers erzeugten Geräusche sind dabei insbesondere lauter als wahrnehmbare Eigengeräusche des jeweiligen Antriebsaggregats. Gleichzeitig ist es dadurch möglich, die Schallemission des Fahrzeugs in die Umgebung zu verbessern, wodurch eine akustische Wahrnehmbarkeit des Fahrzeugs erleichtert wird. Insbesondere arbeitet der Schallerzeuger nicht als aktiver Schalldämpfer, der Antischall zur Reduzierung von Störschall erzeugt.

Der Schallerzeuger weist erfindungsgemäß ein Gehäuse auf, in dem der wenigstens eine elektroakustische Wandler angeordnet ist. Ein derartiger Wandler kann bspw. nach Art eines Lautsprechers aufgebaut sein. Erfindungsgemäß weist der Wandler eine Membran auf, die im Gehäuse ein Rückvolumen von einem Vorvolumen trennt. Ferner kann der Wandler einen Membranantrieb zum Antreiben der Membran aufweisen. Der Membranantrieb ist in der Regel ein elektromagnetischer Linearmotor oder Solenoid. Letztlich verbindet das Austrittsrohr das Vorvolumen akustisch und fluidisch unmittelbar mit dem jeweiligen Abstrahlraum.

Grundsätzlich kann es ausreichen, das Fahrzeug mit nur einem einzigen Schallerzeuger auszustatten. Sofern mehrere Schallerzeuger vorgesehen sind, ist denkbar, zumindest einen Schallerzeuger nach innen zu orientieren und wenigstens einen anderen Schallerzeuger nach außen zu orientieren. Der jeweilige nach innen orientierte Schallerzeuger verbessert eine Schallemission in den Passagierraum des Fahrzeugs, während der jeweilige nach außen orientierte Schallerzeuger die Schallemission des Fahrzeugs in die Umgebung verbessert.

Entsprechend einer vorteilhaften Ausführungsform kann vorgesehen sein, dass der Schallerzeuger weder eine Abgasanlage einer Brennkraftmaschine, noch eine Frischfrischluftanlage der Brennkraftmaschine kontaktiert. Durch dieses Merkmal soll zum Ausdruck gebracht werden, dass der Schallerzeuger quasi unabhängig von der Abgasanlage und unabhängig von der Frischluftanlage am bzw. im Fahrzeug angeordnet werden kann. Somit unterscheidet sich der hier verwendete Schallerzeuger insbesondere von aktiven Schalldämpfern, die bspw. an einer Abgasanlage oder an einer Frischluftanlage angeordnet werden können und die in der Regel dazu dienen, die Schallemission der Brennkraftmaschine zu reduzieren.

Bei einer anderen vorteilhaften Ausführungsform kann das Antriebsaggregat eine Brennkraftmaschine aufweisen, die eine Abgasanlage und eine Frischluftanlage besitzt, wobei das Austrittsrohr des Schallerzeugers unabhängig von einem Einlass der Frischluftanlage und unabhängig von einem Auslass der Abgasanlage außerhalb der Frischluftanlage und außerhalb der Abgasanlage angeordnet ist. Auch für den Fall, dass eine Brennkraftmaschine vorgesehen ist, soll der hier vorgestellte Schallerzeuger entsprechend dieser speziellen Ausführungsform unabhängig von der Abgasanlage und unabhängig von der Frischluftanlage sein.

Erfindungsgemäß weist das Antriebsaggregat wenigstens einen Elektromotor und eine Brennkraftmaschine auf, wobei der Antrieb des Fahrzeugs nur durch den wenigstens einen Elektromotor erfolgt. Die Brennkraftmaschine dient nur zur Stromerzeugung. In diesem Fall steuert das Erzeugersteuergerät den Wandler bzw. den Membranantrieb abhängig vom aktuellen Betriebszustand des jeweiligen Elektromotors an. Mit anderen Worten, bei einem Fahrzeug mit Elektroantrieb und Range-Extender wird der Schallerzeuger abhängig vom Betriebszustand des Elektroantriebs angesteuert. Insbesondere ist die Ansteuerung des Schallerzeugers unabhängig vom Betriebszustand des Range-Extenders. Bei einem derartigen Fahrzeug kann der Range-Extender, der bevorzugt stationär in einem optimalen Betriebsbereich betrieben wird, durch sein Geräusch einen Betriebszustand für das Antriebsaggregat vortäuschen, der nichts mit dem aktuellen Betriebszustand des Antriebsaggregats zu tun hat. Insbesondere ist besagtes Geräusch unabhängig von der aktuellen Geschwindigkeit des Fahrzeugs. Durch die Kopplung des Schallerzeugers mit dem Betriebszustand des Elektroantriebs kann das störende Geräusch des Range-Extenders überlagert werden, so dass die akustisch wahrnehmbaren Geräusche wieder dem Betriebszustand des Antriebsaggregats und dem Fahrzustand des Fahrzeugs zugeordnet werden können.

Bei einer nicht erfindungsgemäßen Ausführungsform kann das Antriebsaggregat zumindest einen Elektromotor, jedoch keine Brennkraftmaschine aufweisen. Auch in diesem Fall kann das Erzeugersteuergerät den Wandler bzw. den Membranantrieb abhängig vom aktuellen Betriebszustand des jeweiligen Elektromotors ansteuern.

Entsprechend einer vorteilhaften Weiterbildung kann das Austrittsrohr des Schallerzeugers wie ein Endrohr einer Abgasanlage ausgestaltet sein und in einem Heckbereich des Fahrzeugs angeordnet sein. Hierdurch ist es in besonders eindrucksvoller Weise möglich, Motorgeräusche in gewohnter Weise über das Endrohr, den so genannten "Auspuff", in die Umgebung zu emittieren.

Bei einer anderen Ausführungsform kann der Schallerzeuger in einem Frontraum des Fahrzeugs angeordnet sein, der nach vorne an einen Passagierraum des Fahrzeugs anschließt, wobei das Austrittsrohr des Schallerzeugers auf den Passagierraum ausgerichtet ist. In diesem Fall erhalten die Passagiere die simulierten Motorgeräusche von vorn aus dem Motorraum/Frontraum, was der gewohnten Wahrnehmung bei Fahrzeugen mit herkömmlicher Brennkraftmaschine entspricht.

Erfindungsgemäß ist im Austrittsrohr oder an einem Austrittsende des Austrittsrohrs ein Schutzgitter angeordnet. Mit Hilfe eines derartigen Schutzgitters kann der Wandler bspw. vor groben Verunreinigungen, vor Steinschlag sowie vor Tieren geschützt werden.

Bei einer anderen Ausführungsform kann das Austrittsrohr für einen vorbestimmten Frequenzbereich als Rohrresonator ausgestaltet sein. Beispielsweise kann das Austrittsrohr für bestimmte Frequenzen, für die eine besonders hohe Amplitude realisiert werden soll, einen λ/4-Resonator oder λ/2-Resonator bilden. Auf diese Weise lassen sich bestimmte Frequenzen signifikant verstärken.

Erfindungsgemäß ist der Wandler in einem Gehäuse des Schallerzeugers angeordnet und weist eine Membran auf, die im Gehäuse ein Rückvolumen von einem Vorvolumen trennt. Das Vorvolumen ist dann in einem Trichter angeordnet, dessen Eintritt an den Wandler anschließt und dessen Austritt an das Austrittsrohr anschließt, wobei eine Axialrichtung des Austritts gegenüber einer Axialrichtung des Eintritts geneigt ist. Beispielsweise kann eine derartige Neigung bei etwa 45° oder mehr liegen. Hierdurch baut der Schallerzeuger zum einen kompakt. Zum anderen wird eine direkte Beaufschlagung der Membran mit Verunreinigungen von außen, wie z. Bsp. Spritzwasser und dergleichen, vermieden.

Bei einer anderen vorteilhaften Ausführungsform kann das Erzeugersteuergerät ein mit dem Betriebszustand des Aggregatantriebs korrelierendes Signal auswerten. Derartige Signale sind bspw. eine aktuelle Drehzahl des jeweiligen Antriebsaggregats, ein Lastzustand des Antriebsaggregats, der sich durch aktuelle Werte von Last und/oder Drehmoment und/oder Leistung charakterisieren kann, eine Gaspedalstellung, insbesondere Winkel und/oder Stellweg und/oder Gradient, Getriebeinformationen, wie eingelegter Gang und/oder aktueller Kupplungszustand, sowie eine aktuelle Geschwindigkeit des Fahrzeugs. Die Signalübertragung kann über herkömmliche Signalleitungen erfolgen. Insbesondere ist auch eine Signalübertragung über einen Datenbus möglich.

Erfindungsgemäß steuert das Erzeugersteuergerät den Wandler bzw. den zugehörigen Membranantrieb abhängig von der aktuellen Antriebsleistung des Antriebsaggregats zum Erzeugen eines Motorgeräuschs einer Brennkraftmaschine an. Das Erzeugen von Motorgeräuschen, die zu einer Brennkraftmaschine gehören, eignet sich in besonderer Weise für ein akustisches Feedback für den Fahrzeugführer, da derartige Motorgeräusche nunmehr seit mehr als 100 Jahren gewohnheitsmäßig ein derartiges Feedback bilden. Die Besonderheit wird hierbei jedoch darin gesehen, dass der Schallerzeuger auch dann ein zu einer Brennkraftmaschine zugehöriges Motorgeräusch erzeugen kann, wenn die Brennkraftmaschine des Antriebsaggregats ausgeschaltet ist oder wenn das Antriebsaggregat gar keine Brennkraftmaschine besitzt. Somit lässt sich insbesondere ein Elektrofahrzeug mit der Geräuschkulisse eines Fahrzeugs mit Brennkraftmaschine betreiben.

Bei einer vorteilhaften Weiterbildung kann das Erzeugersteuergerät zum Erzeugen verschiedener Motorgeräusche ausgestaltet sein, die verschiedenen Brennkraftmaschinentypen zugeordnet sind, die sich bspw. durch unterschiedliche Zylinderzahlen und/oder durch unterschiedliche Hubräume voneinander unterscheiden können. Im Passagierraum des Fahrzeugs kann nun eine mit dem Erzeugersteuergerät gekoppelte Bedieneinrichtung angeordnet sein, die vom Fahrzeugführer manuell betätigbar ist und mit deren Hilfe das aktuell vom Erzeugersteuergerät zu erzeugende Motorgeräusch auswählbar ist. Mit anderen Worten, der Fahrzeugführer kann willkürlich auswählen und einstellen, zu welchem Typ von Brennkraftmaschine die vom Schallerzeuger generierten Motorgeräusche gehören sollen. Beispielsweise kann der Fahrzeugführer so zwischen einem Vier-Zylinder-Reihenmotor und einem V8-Motor auswählen. Die vorstehenden Beispiele sind dabei rein willkürlich, so dass grundsätzlich beliebige Brennkraftmaschinentypen mit quasi beliebigen Zylinderzahlen und quasi beliebigen Hubräumen einstellbar sind.

Erfindungsgemäß lässt sich mit Hilfe einer mit dem Erzeugersteuergerät gekoppelten, manuell betätigbaren Bedieneinrichtung unabhängig vom tatsächlichen Betriebszustand des Antriebsaggregats dem Erzeugersteuergerät ein virtueller Betriebszustand übermitteln, der dem tatsächlichen Betriebszustand dann übergeordnet ist. Beispielsweise kann dadurch der Fahrzeugführer eine willkürliche Veränderung des Motorgeräusches bei gleichbleibendem Brennkraftmaschinentyp auslösen. Beispielsweise kann der Fahrzeugführer dadurch andere oder höhere Drehzahlen simulieren. Dies kann bspw. dann von Vorteil sein, wenn der Fahrzeugführer bei einem Ampelstopp "testen" möchte, ob das Antriebsaggregat noch betriebsbereit ist. Bei herkömmlichen Fahrzeugen der Brennkraftmaschine kann das im ausgekuppelten Zustand durch Betätigen des Gaspedals erfolgen. Der Fahrzeugführer hört dann sofort durch das Hochdrehen des Motors, dass alles in Ordnung ist. Durch den Vorschlag, mit Hilfe einer Bedieneinrichtung virtuelle Betriebszustände zu generieren lässt sich ein derartiges "Testverhalten" nachbilden.

Bei einer anderen Ausführungsform kann vorgesehen sein, dass das Fahrzeug kein Schaltgetriebe besitzt. Dies ist insbesondere bei Elektrofahrzeugen der Fall, bei denen aufgrund des großen Drehzahlbereichs der Elektromotoren grundsätzlich auf ein Schaltgetriebe verzichtet werden kann. Bei derartigen Fahrzeugen kann das Erzeugersteuergerät den Wandler bzw. den Membranantrieb abhängig vom aktuellen Betriebszustand des Antriebsaggregats zum Variieren des Motorgeräusches ansteuern, derart, dass das Motorgeräusch abhängig vom aktuellen Betriebszustand des Antriebsaggregats auch Schaltvorgänge und unterschiedliche Getriebestufen akustisch simuliert. Auch diese Maßnahme trägt dazu bei, dass sich Fahrzeugführer, die Fahrzeuge mit Brennkraftmaschinen gewohnt sind, in Fahrzeugen mit Elektroantrieb besser zurecht finden.

Desweiteren ist es grundsätzlich möglich, das Erzeugersteuergerät so zu konfigurieren, dass es den Wandler zum Erzeugen eines Anlassgeräusches einer Brennkraftmaschine ansteuert, wenn das Antriebsaggregat eingeschaltet wird, unabhängig davon, ob eine Brennkraftmaschine des Antriebsaggregats tatsächlich angelassen wird oder ob das Antriebsaggregat überhaupt eine Brennkraftmaschine aufweist.

Die vorstehend genannten Maßnahmen sollen insgesamt dazu dienen, die Akzeptanz von Fahrzeugen mit Elektromotor bzw. von Fahrzeugen mit sehr kleinen Brennkraftmaschinen bei den Anwendern zu verbessern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Prinzipdarstellung eines Straßenfahrzeugs in einer Seitenansicht,
- Fig. 2: eine Schnittansicht eines Schallerzeugers.

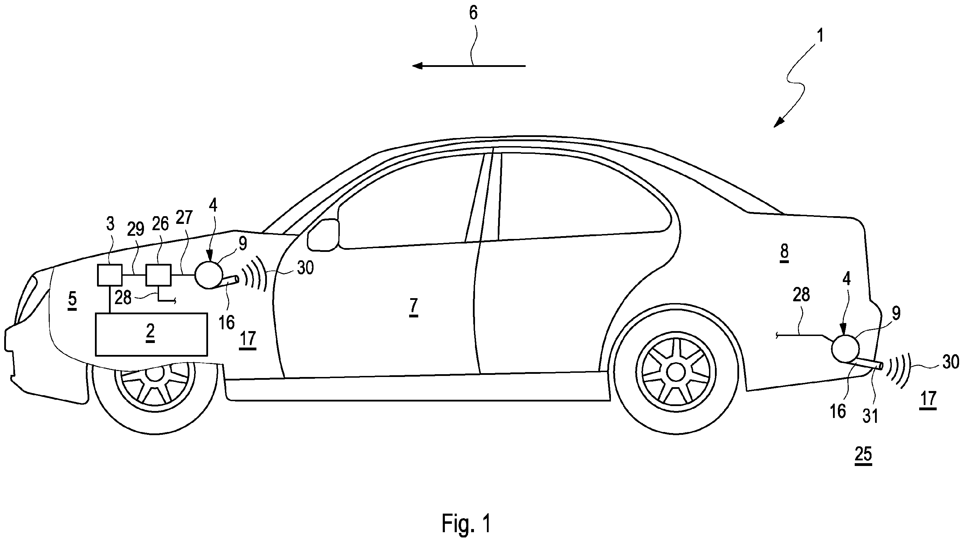

Entsprechend Fig. 1 umfasst ein Straßenfahrzeug 1, bei dem es sich bspw. um einen Personenkraftwagen handelt, ein Antriebsaggregat 2, das zum Antreiben des Fahrzeugs 1 dient, ein Aggregatsteuergerät 3, das zum Ansteuern des Antriebsaggregats 2 dient, und wenigstens einen Schallerzeuger 4, der zum Erzeugen von Luftschall dient. Im Beispiel der Fig. 1 sind zwei derartige Schallerzeuger 4 vorgesehen. Beispielsweise kann ein solcher Schallerzeuger 4 in einem Frontraum 5 des Fahrzeugs 1 angeordnet sein, der bezüglich einer Fahrtrichtung 6 des Fahrzeugs 1 bei Vorwärtsfahrt nach vorn an einen Passagierraum 7 angrenzt. Ebenso kann ein solcher Schallerzeuger 4 in einem Heckbereich 8 des Fahrzeugs 1 angeordnet sein, der nach hinten an den Passagierraum 7 angrenzt.

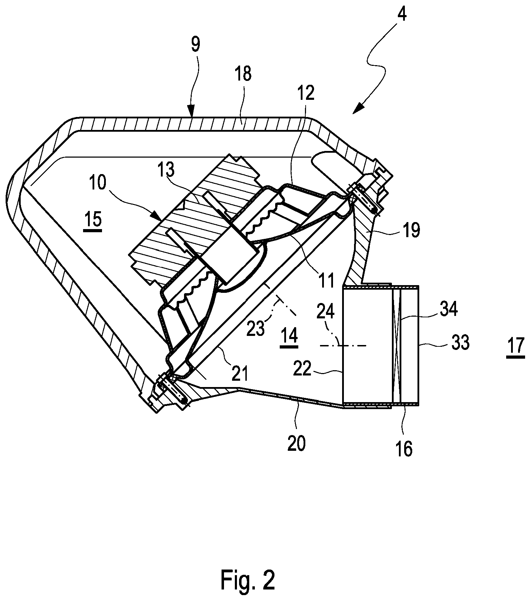

Entsprechend Fig. 2 kann ein derartiger Schallerzeuger 4 in einem Gehäuse 9 zumindest einen elektroakustischen Wandler 10 aufweisen, der eine Membran 11, einen Käfig 12 und einen Membranantrieb 13 aufweist. Die Membran 11 trennt im Gehäuse 9 ein Vorvolumen 14 von einem Rückvolumen 15. Die Membran 11 ist elastisch und schwingungsfähig. Der Membranantrieb 13 ist ein elektromagnetischer Aktuator und kann die Membran 11 zu Schwingungen antreiben. Der Käfig 12 ist am Gehäuse 9 abgestützt, spannt die Membran 11 auf und trägt den Membranantrieb 13. Der Wandler 10 kann grundsätzlich nach Art eines Lautsprechers aufgebaut sein.

Der Schallerzeuger 4 besitzt außerdem ein Austrittsrohr 16, das den Schallerzeuger 4 mit einem Abstrahlraum 17 akustisch und fluidisch unmittelbar verbindet. Im einzelnen verbindet das Austrittsrohr 16 das Vorvolumen 14 mit dem Abstrahlraum 17.

Das Gehäuse 9 ist hier aus zwei Gehäuseteilen 18, 19 zusammengebaut, von denen das eine topfförmig ausgestaltet ist und im Folgenden als Gehäusetopf 18 bezeichnet wird. Das andere Gehäuseteil 19 ist deckelförmig konzipiert und wird im Folgenden als Gehäusedeckel 19 bezeichnet. Im Beispiel ist der Wandler 10 ausschließlich am Gehäusedeckel 19 befestigt. Der Gehäusetopf 18 ist ebenfalls am Gehäusedeckel 19 befestigt. Im Gehäusedeckel 19 ist ein Trichter 20 integral ausgeformt, der im Wesentlichen das Vorvolumen 14 definiert und der von der Membran 11 zum Austrittsrohr 16 führt. Dementsprechend schließt ein Eintritt 21 des Trichters 20 an den Wandler 10 an, während ein Austritt 22 des Trichters 20 an das Austrittsrohr 16 anschließt. Erkennbar sind dabei eine Axialrichtung 23 des Eintritts 21 und eine Axialrichtung 24 des Austritts 22 zueinander geneigt, bspw. um etwa 45°.

In Fig. 1 ist vom jeweiligen Schallerzeuger 4 im Wesentlichen nur das Gehäuse 9 und das Austrittsrohr 16 dargestellt. Bei dem im Frontraum 5 angeordneten Schallerzeuger 4 mündet das Austrittsrohr 16 im Frontraum 5, so dass hier der Frontraum 5 den Abstrahlraum 17 bildet. Bei dem im Heckbereich 8 angeordneten Schallerzeuger 4 mündet das Austrittsrohr 16 außen am Fahrzeug 1 in einer Umgebung 25, so dass in diesem Fall die Umgebung 25 den Abstrahlraum 17 bildet.

Gemäß Fig. 1 ist außerdem ein Erzeugersteuergerät 26 vorgesehen mit dessen Hilfe der jeweilige Wandler 10 des jeweiligen Schallerzeugers 4 angesteuert werden kann. Hierzu kann das Erzeugersteuergerät 26 mit dem jeweiligen Schallerzeuger 4 bzw. mit dessen Wandler 10 über eine entsprechende Steuerleitung 27 bzw. 28 verbunden sein. Das Erzeugersteuergerät 26 ist seinerseits über eine Signalleitung 29 mit dem Aggregatsteuergerät 3 gekoppelt. Das Aggregatsteuergerät 3 kennt die aktuellen Betriebszustände des Antriebsaggregats 2. Durch die Kopplung zwischen Erzeugersteuergerät 26 und Aggregatsteuergerät 3 kennt nun auch das Erzeugersteuergerät 26 den aktuellen Betriebszustand des Antriebsaggregats 2. Das Erzeugersteuergerät 26 ist nun so ausgestaltet bzw. programmiert, dass es den jeweiligen Schallerzeuger 4 abhängig vom aktuellen Betriebszustand des Antriebsaggregats 2 zum Erzeugen und Abstrahlen von Schall ansteuert. Eine entsprechende Schallabstrahlung ist in Fig. 1 mit gekrümmten Linien angedeutet und mit 30 bezeichnet.

Das Antriebsaggregat 2 kann gemäß einer ersten Variante eine Brennkraftmaschine zum Antreiben des Fahrzeugs 1 aufweisen. Eine derartige Brennkraftmaschine weist in üblicher Weise eine Abgasanlage und eine Frischluftanlage auf. Gemäß einer zweiten Alternative kann das Antriebsaggregat zumindest einen Elektromotor zum Antreiben des Fahrzeugs 1 aufweisen, ohne dass eine Brennkraftmaschine vorhanden ist. Bei einer dritten Variante kann zusätzlich zu dem wenigstens einen Elektromotor eine Brennkraftmaschine vorhanden sein, um einen Hybridantrieb zu realisieren. Dabei kann vorgesehen sein, dass wahlweise der jeweilige Elektromotor oder die Brennkraftmaschine zum Antreiben des Fahrzeugs 1 genutzt werden. Bei einer alternativen Ausführungsform dient die Brennkraftmaschine dagegen nicht zum direkten Antreiben des Fahrzeugs 1, sondern im Wesentlichen nur zur Stromerzeugung, um den jeweiligen Elektromotor zum Antreiben des Fahrzeugs 1 auch dann mit elektrischer Energie versorgen zu können, wenn zugehörige Batterien aufgebraucht sind.

Bevorzugt wird der jeweilige Schallerzeuger 4 im bzw. am Fahrzeug 1 so angeordnet, dass er weder eine Abgasanlage einer ggf. vorhandenen Brennkraftmaschine noch eine Frischluftanlage dieser Brennkraftmaschine kontaktiert. Insbesondere lässt sich der jeweilige Schallerzeuger 4 hinsichtlich seines Austrittsrohrs 16 unabhängig von einem Einlass einer solchen Frischluftanlage sowie unabhängig von einem Auslass einer solchen Abgasanlage außerhalb der Frischluftanlage und außerhalb der Abgasanlage anordnen.

Sofern das Antriebsaggregat 2 nur eine Brennkraftmaschine, also keinen Elektromotor zum Antreiben des Fahrzeugs 1 umfasst, steuert das Erzeugersteuergerät 26 den jeweiligen Schallerzeuger 4 abhängig vom aktuellen Betriebszustand der Brennkraftmaschine an. Besitzt das Antriebsaggregat 2 sowohl eine Brennkraftmaschine als auch zumindest einen Elektromotor zum Antreiben des Fahrzeugs 1, erfolgt die Ansteuerung des jeweiligen Schallerzeugers 4 mit Hilfe des Erzeugersteuergeräts 26 bei eingeschalteter Brennkraftmaschine abhängig vom aktuellen Betriebszustand der Brennkraftmaschine und bei ausgeschalteter Brennkraftmaschine abhängig vom aktuellen Betriebszustand des jeweiligen Elektromotors. Umfasst dagegen das Antriebsaggregat 2 nur wenigstens einen Elektromotor zum Antreiben des Fahrzeugs 1, wobei eine Brennkraftmaschine zur Stromerzeugung vorgesehen ist, ist zweckmäßig vorgesehen, dass das Erzeugersteuergerät 26 den jeweiligen Schallerzeuger 4 abhängig vom aktuellen Betriebszustand des jeweiligen Elektromotors ansteuert. Weist das Antriebsaggregat 2 keine Brennkraftmaschine auf, steuert das Erzeugersteuergerät 26 den jeweiligen Schallerzeuger 4 ebenfalls abhängig vom aktuellen Betriebszustand des jeweiligen Elektromotors an.

Gemäß Fig. 1 kann bei dem im Heckbereich 8 angeordneten Schallerzeuger 4 vorgesehen sein, dass das Austrittsrohr 16 wie ein Endrohr 31 einer Abgasanlage einer Brennkraftmaschine ausgestaltet ist und dementsprechend in der Umgebung 25 des Fahrzeugs 1 mündet. Dies ist insbesondere für den Fall von Bedeutung, dass das Antriebsaggregat 2 gar keine Brennkraftmaschine umfasst. Hier dient der Schallerzeuger 4 vorwiegend dazu, eine Schallemission in die Umgebung 25 des Fahrzeugs 1 zu verstärken, um die akustische Wahrnehmbarkeit des Fahrzeugs 1 zu verbessern.

Bei dem im Frontraum 5 angeordneten Schallerzeuger 4 kann zweckmäßig vorgesehen sein, dass das Austrittsrohr 16 auf den Passagierraum 7 ausgerichtet ist. Auf diese Weise kann die akustische Rückwirkung des aktuellen Betriebszustands des Antriebsaggregats 2 auf die Passagiere, insbesondere auf den Fahrzeugführer, verbessert werden.

Das Erzeugersteuergerät 26 kann zweckmäßig so konfiguriert sein, dass es Signale auswertet, die mit dem aktuellen Betriebszustand des Antriebsaggregats 2 korrelieren. Derartige Signale sind bspw. eine Drehzahl und eine Last des jeweiligen Elektromotors bzw. der Brennkraftmaschine. Ferner kann ein derartiges Signal durch eine Geschwindigkeit des Fahrzeugs 1 gegeben sein. Die Signalübertragung kann bspw. über einen Datenbus erfolgen.

Bemerkenswert ist schließlich, dass das Erzeugersteuergerät 26 den jeweiligen Schallerzeuger 4 bzw. den zugehörigen Wandler 10 bzw. dessen Membranantrieb 13 abhängig von der aktuellen Antriebsleistung des Antriebsaggregats 2 zum Erzeugen eines Motorgeräusches einer Brennkraftmaschine ansteuert, auch wenn das Antriebsaggregat 2 gar keine Brennkraftmaschine aufweist. Sofern das Antriebsaggregat 2 eine Brennkraftmaschine umfasst, kann das Erzeugersteuergerät 26 den jeweiligen Schallerzeuger 4 auch dann zum Abstrahlen eines derartigen Motorgeräusches ansteuern, wenn die Brennkraftmaschine gerade ausgeschaltet ist. Beispielsweise kann bei einem Hybridfahrzeug bei ausgeschalteter Brennkraftmaschine, also im reinen Elektrobetrieb das Motorgeräusch einer Brennkraftmaschine simuliert werden. Ebenso ist es bei einem Start-Stopp-Betrieb möglich, ein Leerlaufgeräusch zu simulieren.

Gemäß Fig. 1 kann im Passagierraum 7 eine manuell betätigbare Bedieneinrichtung 32 vorgesehen sein, die auf geeignete Weise mit dem Erzeugersteuergerät 26 gekoppelt ist. Über diese Bedieneinrichtung 32 ist es für den Fahrzeugführer möglich, im Erzeugersteuergerät 26 hinterlegte Motorgeräusche, die verschiedenen Brennkraftmaschinentypen zugeordnet sind, auszuwählen und zu aktivieren. Beispielsweise können die unterschiedlichen Brennkraftmaschinentypen verschiedene Zylinderzahlen und/oder verschiedene Hubräume besitzen.

Desweiteren ist es mit Hilfe einer derartigen Bedieneinrichtung 32 grundsätzlich möglich, unabhängig vom tatsächlichen Betriebszustand des Antriebsaggregats 2 dem Erzeugersteuergerät 26 einen virtuellen Betriebszustand zu übermitteln, der dann dem tatsächlichen Betriebszustand übergeordnet ist und diesen bei der Ansteuerung des jeweiligen Schallerzeugers 4 übersteuert. Beispielsweise kann der Fahrzeugführer dadurch bei stehendem Fahrzeug ein "Hochdrehen" des Motors simulieren.

Sofern das Antriebsaggregat 2 zum Antreiben des Fahrzeugs 1 nur wenigstens einen Elektromotor aufweist, ist grundsätzlich kein Schaltgetriebe erforderlich. Dennoch kann der Fahrzeugführer den Wunsch haben, die typischen Schaltgeräusche wahrzunehmen. Gemäß einer vorteilhaften Ausgestaltung kann das Erzeugersteuergerät 26 den jeweiligen Schallerzeuger 4 zum Variieren des Motorgeräusches ansteuern, derart, dass das Motorgeräusch abhängig vom aktuellen Betriebszustand des Antriebsaggregats 2 auch Schaltvorgänge und unterschiedliche Getriebestufen akustisch simuliert. Desweiteren kann vorgesehen sein, dass das Erzeugersteuergerät 26 ein typisches Anlassgeräusch einer Brennkraftmaschine simuliert, auch wenn gar keine Brennkraftmaschine vorhanden ist.

Gemäß Fig. 2 kann im Austrittsrohr 16 ein Schutzgitter 34 angeordnet sein, das bspw. ein Eintreten von grobem Schmutz in den Trichter 20 verhindert. Ein derartiges Schutzgitter 34 kann grundsätzlich auch an einem Austrittsende 33 des Austrittsrohrs 16 angeordnet sein. Die Länge des Austrittsrohrs 16 ist in Fig. 2 rein exemplarisch und ohne Beschränkung der Allgemeinheit dargestellt. Entsprechend einer bevorzugten Ausführungsform kann vorgesehen sein, das Austrittsrohr 16 als Rohrresonator auszugestalten, der bei bestimmten Frequenzen bzw. Frequenzbereichen eine Amplitudenverstärkung bewirkt. Beispielsweise können sich am Austrittsrohr 16 stehende Wellen ausbilden. Bei einer gezielten Auswahl der Länge des Austrittsrohrs 16 lässt sich dadurch ein λ/4-Resonator bzw. ein λ/2-Resonator generieren.

## Patentansprüche

1. Straßenfahrzeug,
- mit einem Antriebsaggregat (2) zum Antreiben des Fahrzeugs (1),
- mit einem Aggregatsteuergerät (3) zum Ansteuern des Antriebsaggregats (2),
- mit wenigstens einem Schallerzeuger (4), der wenigstens einen elektroakustischen Wandler (10) aufweist,
- wobei der Schallerzeuger (4) ein Austrittsrohr (16) aufweist, das den Schallerzeuger (4) akustisch und fluidisch unmittelbar mit einem Abstrahlraum (17) verbindet, den der im Betrieb des Schallerzeugers (4) vom Wandler (10) erzeugte Schall abstrahlt,
- wobei ein Erzeugersteuergerät (26) zum Ansteuern des Wandlers (10) mit dem Aggregatsteuergerät (3) gekoppelt ist und den Wandler (4) abhängig vom aktuellen Betriebszustand des Antriebsaggregats (2) ansteuert,
- wobei das Erzeugersteuergerät (26) den Wandler (10) abhängig von der aktuellen Antriebsleistung des Antriebsaggregats (2) zum Erzeugen eines Motorgeräusches einer Brennkraftmaschine ansteuert,
**dadurch gekennzeichnet,**
- **dass** das Antriebsaggregat (2) wenigstens einen Elektromotor und eine Brennkraftmaschine aufweist,
- **dass** der Antrieb des Fahrzeugs (1) nur durch den wenigstens einen Elektromotor erfolgt,
- **dass** die Brennkraftmaschine zur Stromerzeugung dient,
- **dass** das Erzeugersteuergerät (26) den Wandler (10) abhängig vom aktuellen Betriebszustand des jeweiligen Elektromotors ansteuert,
- **dass** im Austrittsrohr (16) oder an einem Austrittsende (33) des Austrittsrohrs (16) ein Schutzgitter (34) angeordnet ist,
- **dass** der Wandler (10) in einem Gehäuse (9) des Schallerzeugers (4) angeordnet ist,
- **dass** eine Membran (11) des Wandlers (10) im Gehäuse (9) ein Vorvolumen (14) von einem Rückvolumen (15) trennt,
- **dass** das Vorvolumen (14) in einem Trichter (20) angeordnet ist, dessen Eintritt (21) an den Wandler (10) anschließt und dessen Austritt (22) an das Austrittsrohr (16) anschließt, wobei eine Axialrichtung (24) des Austritts (22) gegenüber einer Axialrichtung (23) des Eintritts (21) geneigt ist,
- **dass** mit Hilfe einer mit dem Erzeugersteuergerät (26) gekoppelten, manuell betätigbaren Bedieneinrichtung (32) unabhängig vom tatsächlichen Betriebszustand des Antriebsaggregats (2) dem Erzeugersteuergerät (26) ein virtueller Betriebszustand übermittelbar ist, der dem tatsächlichen Betriebszustand übergeordnet ist.

2. Fahrzeug nach Anspruch 1,
**dadurch gekennzeichnet,**
**dass** der Schallerzeuger (4) weder eine Abgasanlage einer Brennkraftmaschine noch eine Frischluftanlage einer Brennkraftmaschine kontaktiert.

3. Fahrzeug nach Anspruch 1 oder 2,
**dadurch gekennzeichnet,**
**dass** das Antriebsaggregat (2) eine Brennkraftmaschine aufweist, die eine Abgasanlage und eine Frischluftanlage aufweist, wobei das Austrittsrohr (16) unabhängig von einem Einlass der Frischluftanlage und unabhängig von einem Auslass der Abgasanlage außerhalb der Frischluftanlage und außerhalb der Abgasanlage angeordnet ist.

4. Fahrzeug nach einem der Ansprüche 1 bis 3,
**dadurch gekennzeichnet,**
**dass** der Schallerzeuger (4) in einem Frontraum (5) des Fahrzeugs (1) angeordnet ist, der nach vorne an einen Passagierraum (7) des Fahrzeugs (1) anschließt, wobei das Austrittsrohr (16) auf den Passagierraum (7) ausgerichtet ist.

5. Fahrzeug nach einem der Ansprüche 1 bis 4,
**dadurch gekennzeichnet,**
**dass** das Austrittsrohr (16) für einen vorbestimmten Frequenzbereich als Rohrresonator ausgestaltet ist.

6. Fahrzeug nach einem der Ansprüche 1 bis 5,
**dadurch gekennzeichnet,**
**dass** das Erzeugersteuergerät (26) ein mit dem Betriebszustand des Antriebsaggregats (2) korrelierendes Signal auswertet.

7. Fahrzeug nach einem der vorhergehenden Ansprüche,
**dadurch gekennzeichnet,**
- **dass** das Erzeugersteuergerät (26) zum Erzeugen verschiedener Motorgeräusche ausgestaltet ist, die verschiedene Brennkraftmaschinentypen zugeordnet sind,
- **dass** in einem Passagierraum (7) des Fahrzeugs (1) eine mit dem Erzeugersteuergerät (26) gekoppelte Bedieneinrichtung (32) angeordnet ist, mit deren Hilfe das aktuell vom Erzeugersteuergerät (26) zu erzeugende Motorgeräusch auswählbar ist.

8. Fahrzeug nach einem der vorhergehenden Ansprüche,
**dadurch gekennzeichnet,**
- **dass** das Fahrzeug (1) kein Schaltgetriebe aufweist,
- **dass** das Erzeugersteuergerät (26) den Wandler (10) abhängig vom aktuellen Betriebszustand des Antriebsaggregats (2) zum Variieren des Motorgeräusches ansteuert, derart, dass das Motorgeräusch abhängig vom aktuellen Betriebszustand des Antriebsaggregats (2) auch Schaltvorgänge und unterschiedliche Getriebestufen akustisch simuliert.

## Claims

1. Road vehicle,
- with a drive unit (2) for driving the vehicle (1),
- with a drive unit control device (3) for actuating the drive unit (2),
- with at least one sound generator (4) comprising at least one electroacoustic converter (10),
- wherein the sound generator (4) comprises an emission pipe (16) that ensures that the sound generator (4) and the emission chamber (17) are in direct acoustic and fluid communication with other another, which emission pipe emits the sound generated by the converter (10) when the sound generator (4) is in operation,
- wherein a generator control device (26) is coupled with the drive unit control device (3) to actuate the converter (10), and actuates the converter (4) depending on the current operating state of drive unit (2),
- wherein the generator control device (26) actuates the converter (10) to generate an engine noise of an internal combustion engine depending on the current driving output of the drive unit (2),
**characterised in that**
- the drive unit (2) comprises at least one electric motor and one internal combustion engine,
- the vehicle (1) is only driven by the at least one electric motor,
- the internal combustion engine is used for generating electrical power,
- the generator control device (26) actuates the converter (10) according to the current operating state of the respective electric motor,
- a protective grille (34) is arranged in the emission pipe (16) or at an outlet end (33) of the emission pipe (16),
- the converter (10) is arranged in a housing (9) of the sound generator (4),
- a membrane (11) of the converter (10) separates a front volume (14) from a rear volume (15) in the housing (9),
- the front volume (14) is arranged inside a funnel (20), the inlet (21) of which adjoins the converter (10), and the outlet (22) of which adjoins the emission pipe (16), wherein an axial direction (24) of the outlet (22) is inclined with respect to an axial direction (23) of the inlet (21),
- a virtual operating state is transmittable to the generator control device (26) with the aid of a manually operable operating means (32) that is coupled to the generator control device (26) independently of the actual operating state of the drive unit (2), and which overrides the actual operating state.

2. Vehicle according to claim 1,
**characterised in that**
the sound generator (4) does not come into contact with either an exhaust system of an internal combustion engine or a fresh air feed unit of an internal combustion engine.

3. Vehicle according to claim 1 or 2,
**characterised in that**
the drive unit (2) has an internal combustion engine, which comprises an exhaust system and a fresh air feed unit, wherein the emission pipe (16) is arranged outside of the fresh air feed unit and outside the exhaust system independently of an inlet to the fresh air feed unit and independently of an outlet from the exhaust system.

4. Vehicle according to any of claims 1 to 3,
**characterised in that**
the sound generator (4) is arranged in a front space (5) of the vehicle (1), which adjoins a passenger compartment (7) of the vehicle (1) in the front, wherein the emission pipe (16) is directed toward the passenger compartment (7).

5. Vehicle according to any of claims 1 to 4,
**characterised in that**
the emission pipe (16) is designed as a tubular resonator for a predetermined frequency range.

6. Vehicle according to any of claims 1 to 5,
**characterised in that**
the generator control device (26) evaluates a signal that correlates with the operating state of the drive unit (2).

7. Vehicle according to any one of the preceding claims,
**characterised in that**
- the generator control device (26) is designed to generate various engine noises that are allocated to different types of internal combustion engine,
- an operating means (32) coupled to the generator control device (26) is arranged in a passenger compartment (7) of the vehicle (1), which operating means can be used to select the engine noise that is currently to be generated by the generator control device (26).

8. Vehicle according to any one of the preceding claims,
**characterised in that**
- the vehicle (1) does not have a manual transmission,
- the generator control device (26) actuates the converter (10) depending on the current operating state of the drive unit (2) to vary the engine noise in such manner that the engine also simulates the audible sounds of gear changing operations and various transmission stages depending on the current operating state of the drive unit (2).

## Revendications

1. Véhicule routier,
- avec un groupe d'entraînement (2) pour entraîner le véhicule (1),
- avec un dispositif de commande de groupe (3) pour commander le groupe d'entraînement (2),
- avec au moins un générateur acoustique (4) qui présente au moins un transformateur électroacoustique (10),
- dans lequel le générateur acoustique (4) présente un tuyau de sortie (16) qui connecte acoustiquement et fluidiquement le générateur acoustique (4) directement à un espace d'émission (17) auquel le son généré par le transformateur (10) pendant le fonctionnement du générateur acoustique (4) est émis,
- dans lequel un dispositif de commande de générateur (26) pour commander le transformateur (10) est couplé au dispositif de commande de groupe (3) et commande le transformateur (4) en fonction de l'état de fonctionnement actuel du groupe d'entraînement (2),
- dans lequel le dispositif de commande de générateur (26) commande le transformateur (10) en fonction de la puissance d'entraînement actuelle du groupe d'entraînement (2) pour générer un bruit de moteur d'un moteur à combustion interne, **caractérisé en ce**
- **que** le groupe d'entraînement (2) présente au moins un moteur électrique et un moteur à combustion interne,
- **que** l'entraînement du véhicule (1) est effectué uniquement par l'au moins un moteur électrique,
- **que** le moteur à combustion interne sert à générer du courant,
- **que** le dispositif de commande de générateur (26) commande le transformateur (10) en fonction de l'état de fonctionnement actuel du moteur électrique respectif,
- **qu'**une grille de protection (34) est disposée dans le tuyau de sortie (16) ou à une extrémité de sortie (33) du tuyau de sortie (16),
- **que** le transformateur (10) est disposé dans un boîtier (9) du générateur acoustique (4),
- **qu'**une membrane (11) du transformateur (10) dans le boîtier (9) sépare un volume avant (14) d'un volume arrière (15),
- **que** le volume avant (14) est disposé dans un entonnoir (20), dont l'entrée (21) se raccorde au transformateur (10) et dont la sortie (22) se raccorde au tuyau de sortie (16), dans lequel une direction axiale (24) de la sortie (22) est inclinée par rapport à une direction axiale (23) de l'entrée (21),
- **qu'**à l'aide d'un appareil de commande (32) actionnable manuellement couplé au dispositif de commande de générateur (26), un état de fonctionnement virtuel peut être transmis au dispositif de commande de générateur (26) indépendamment de l'état de fonctionnement réel du groupe d'entraînement (2), qui est prioritaire à l'état de fonctionnement réel.

2. Véhicule selon la revendication 1,
**caractérisé en ce**
**que** le générateur acoustique (4) n'entre en contact ni avec un système d'échappement d'un moteur à combustion interne ni avec un système d'air frais d'un moteur à combustion interne.

3. Véhicule selon la revendication 1 ou 2,
**caractérisé en ce**
**que** le groupe d'entraînement (2) présente un moteur à combustion interne, qui présente un système d'échappement et un système d'air frais, dans lequel le tuyau de sortie (16) est disposé indépendamment d'une entrée du système d'air frais et indépendamment d'une sortie du système d'échappement à l'extérieur du système d'air frais et à l'extérieur du système d'échappement.

4. Véhicule selon l'une quelconque des revendications 1 à 3,
**caractérisé en ce**
**que** le générateur acoustique (4) est disposé dans un compartiment avant (5) du véhicule (1) qui se raccorde vers l'avant à un compartiment passager (7) du véhicule (1), dans lequel le tuyau de sortie (16) est aligné avec le compartiment passager (7).

5. Véhicule selon l'une quelconque des revendications 1 à 4,
**caractérisé en ce**
**que** le tuyau de sortie (16) est conçu en tant que résonateur de tuyau pour une plage de fréquences prédéterminée.

6. Véhicule selon l'une quelconque des revendications 1 à 5,
**caractérisé en ce**
**que** le groupe d'entraînement (26) évalue un signal en corrélation avec l'état de fonctionnement du groupe d'entraînement (2).

7. Véhicule selon l'une quelconque des revendications précédentes,
**caractérisé en ce**
- **que** le dispositif de commande de générateur (26) est conçu pour générer différents bruits de moteur associés à différents types de moteurs à combustion interne,
- **qu'**un appareil de commande (32) couplé au dispositif de commande de générateur (26) est disposé dans un compartiment passager (7) du véhicule (1), à l'aide duquel le bruit de moteur à générer actuellement par le dispositif de commande de générateur (26) peut être sélectionné.

8. Véhicule selon l'une quelconque des revendications précédentes,
**caractérisé en ce**
- **que** le véhicule (1) ne présente pas de boîte mécanique,
- **que** le dispositif de commande de générateur (26) commande le transformateur (10) en fonction de l'état de fonctionnement actuel du groupe d'entraînement (2) pour faire varier le bruit de moteur de sorte que le bruit de moteur simule aussi acoustiquement les passages de rapport et les différents étages de transmission en fonction de l'état de fonctionnement actuel du groupe d'entraînement (2).
